# EUROPEAN PATENT SPECIFICATION

(11) **EP 4 420 943 B1**
(45) Date of publication and mention of the grant of the patent: **10.12.2025**
(21) Application number: 23158228.9
(22) Date of filing: 23.02.2023
(51) Int. Cl.: B60T 17/00, B60T 17/04, F16D 65/00

(54) **BRAKE DUST SUCTION DEVICE AND METHOD OF USING BRAKE DUST SUCTION DEVICE**
BREMSSTAUBSAUGER UND VERFAHREN ZUR VERWENDUNG DES BREMSSTAUBSAUGERS
DISPOSITIF D'ASPIRATION DE POUSSIÈRE DE FREIN ET PROCÉDÉ D'UTILISATION DE DISPOSITIF D'ASPIRATION DE POUSSIÈRE DE FREIN

(43) Date of publication of application: 28.08.2024
(73) Proprietor: MANN+HUMMEL GmbH, 71636 Ludwigsburg (DE)
(72) Inventor: WÖRZ, Tobias, 71397 Leutenbach (DE); JESSBERGER, Thomas, 71679 Asperg (DE); BECK, Andreas, 74366 Kirchheim (DE); WELLER, Benedikt, 71711 Steinheim (DE); RIEDEL, Claus-Peter, 71729 Erdmannhausen (DE); WÖBER, Alexander, 71642 Ludwigsburg (DE)
(74) Representative: Mann + Hummel Intellectual Property

(56) References cited:
- EP-A1- 3 144 528
- JP-U- H0 723 786
- US-A1- 2013 105 252

## Description

### Technical Field

The invention relates to a brake dust suction device for a disc brake. Furthermore, the invention relates to a method of using a brake dust suction device for a disc brake.

### Background Art

WO2020/094964 A1 discloses a brake dust suction device for a brake disc assembly in a vehicle with an electric or a hybrid drive. The brake dust particle filter is designed as an active extraction system including a turbine as a vacuum source, which is driven to generate an air flow in the direction of a particle filter. The vacuum source is activated via a control unit as soon as the electric motor drive for energy recovery is running in braking mode. Hence, it is possible to activate the vacuum source and generate an air flow before the friction brake is activated in the vehicle. As soon as the friction brake is applied the air flow can dissipate the friction particles.

EP 1 837 066 A2 describes a particle filter arrangement for a motor vehicle, by means of which particulates are extracted from various units and from various locations in the vehicle. The particulate filter arrangement has an air flow generator and a filter medium in a filter housing, into which suction hoses are guided. Via the suction hoses, air is drawn in from the floor area of the vehicle, among other places, and directed to the filter housing.

GB 1 906 14 727 discloses a particle filter arrangement in a motor vehicle having a funnel-shaped intake opening which is arranged adjacent to a vehicle wheel and via which dust is conducted into a dust collection container. Another brake dust suction device is known from US 2013/105252 A1.

It is an object of the invention to effectively remove particles which are produced when disc brakes in a vehicle are actuated.

### Summary

According to the invention, a brake dust suction device is provided which can be used in vehicles, in particular in motor vehicles, to collect dust and particles which are produced by friction in a disc brake when the vehicle brake is actuated. The brake dust suction device comprises an inlet connected to a suction line that is connected to an opening of the disc brake; a suction fan assembly comprising a fan, a housing and an outlet, and configured to suction air comprising brake dust from the disc brake through the opening, the suction line, and the inlet; a filter configured to filter the brake dust from the suctioned air, to output filtered air; and an air redirection element configured to redirect the air blown out at the outlet of the suction fan assembly to the fan of the suction fan assembly for cooling the fan.

In order to generate a high suction flow, powerful suction fans might be used. These suction fans run at high speed, for example at up to 60,000 revolutions per minute, which leads to high heating of the housing. In order to avoid overheating and maintain the suction fan's performance over a long period of time, the suction fan must be cooled, which is accomplished with the help of the deflected airflow that hits the fan and cools the fan. Hence, the advantage of the inventive design is that heat generated by the revolution of the suction fan is dissipated into the atmosphere and does not lead to thermally induced damages of the housing.

It is another advantage of this design that the thermal reduction is achieved solely with the help of the air flow which is produced by the suction fan. There is no need for any additional energy consuming means in order to cool the fan. The air redirection element guides the air flow from the outlet to the fan of the suction fan assembly. Therefore, the air flow on the one hand transports dust particles from the disc brake to the filter, and on the other hand cools the suction fan.

The outlet of the suction fan assembly is integrated in the housing. It is possible to design the outlet and the housing in a way that the air flow leaving the outlet immediately hits the fan. In this configuration the air redirection element is comprised by the part of the housing which contains the outlet and the outlet itself; in this case no other element for redirecting the air flow is needed.

In an advantageous embodiment, the air redirection element is configured as an air redirection line which leads the air that is blown out at the outlet of the suction fan to the housing. The air redirection line enables the connection between the outlet and the fan regardless the position of the outlet and the geometry of the fan and/or the housing. In another preferred embodiment, the air redirection line is designed as a flexible hose, for example as a flexible ripped hose. However, rigid air redirection lines like pipes can also be used.

In another advantageous embodiment, the suction fan assembly further comprises a plurality of ribs disposed on the surface of the housing of the suction fan assembly, preferably on a top surface of the housing, the plurality of ribs being configured to transfer heat from the suction fan assembly to the outside. The ribs enlarge the surface of the housing of the suction fan assembly which improves the heat dissipation. The air flow leaving the outlet in the housing of the suction fan assembly fan and the air redirection element hits and cools the plurality of ribs, the housing and the fan. Preferably, the ribs are configured as plates standing parallel to each other, while the air flow is directed into the space between adjacent ribs.

In another advantageous embodiment, the brake dust suction device further comprises guide ribs respectively extending from side surfaces of the suction fan assembly, the guide ribs being configured to guide the redirected air into areas about the housing of the suction fan. Preferably, the guide ribs serve as shielding and air guiding elements on opposite sides of the housing and enclose the plurality of ribs which are positioned on an outer contour of the housing. The guide ribs make sure that the redirected air is directed through the plurality of ribs. In a preferred embodiment, the guide ribs are made one-piece with a housing of the brake dust suction device carrying the suction fan assembly.

In yet another advantageous embodiment, the brake dust suction device comprises another inlet connected to another suction line that is connected to another opening of another disk brake, wherein the suction fan assembly is further configured to suction the air comprising the brake dust, from the other disc brake through the other opening, the other suction line, and the other inlet. In this configuration brake dust from two different disc brakes can be collected in the filter of the brake dust suction device, e. g. from disc brakes in both front wheels or from disc brakes in both rear wheels. Hence, a single suction fan assembly and a single filter are used for collecting brake dust from several disc brakes.

In another advantageous embodiment, the brake dust suction device comprises a housing; and one or more mounting devices disposed on a side surface of the housing included in the brake dust suction device, the one or more mounting devices being configured to mount the brake dust suction device to a surface inside a vehicle is advantageous to place several mounting devices on the side surface of the housing. The one or more mounting devices allow to fix the brake dust suction device inside the vehicle.

The housing of the brake dust suction device is preferably configured to take up one or several filter elements which are accommodated inside the housing. The housing of the brake dust suction device carries the suction fan assembly which in a preferred embodiment is positioned on top of the housing of the brake dust suction device. The housing of the suction fan assembly may be fixed with screws to the housing of the brake dust suction device.

In another preferred embodiment, the housing of the brake dust suction device is identical with the housing of the filter.

According to another preferred embodiment the suction fan of the suction fan assembly is positioned downstream of the filter. In this configuration, first the air flow is directed to the filter and after passing the filter the air flow is directed to the suction fan of the suction fan assembly which creates a negative pressure to generate the desired suction flow.

The invention also refers to a method of using a brake dust suction device, preferably a method of using a brake dust suction device as described above, the method comprising the following steps:
- suctioning, by a suction fan assembly comprising a suction fan, a housing and an outlet, air comprising brake dust, from a disc brake through an opening of the disc brake, a suction line connected to the opening, and an inlet connected to the suction line;
- filtering, by a filter, the brake dust from the suctioned air, to output filtered air;
- blowing, by the suction fan assembly, the filtered air to an air redirection element at to the outlet of the suction fan; and
- redirecting, by the air redirection element, the blown air to the fan of the suction fan assembly, to cool the fan.

The various steps of the method may be accomplished simultaneously or one after the other. When starting the suction process, the suction fan is propelled and creates a suction pressure for generating the air flow which transports brake dust from the disc brake through the suction line to the filter. Brake dust is filtered out in one or several filter elements. The filtered air downstream the suction fan is then redirected and blown out by the pressure of the suction fan to the suction fan in order to cool the suction fan.

### Brief Description of the Drawings

A description will now be given as a non-limiting example of a form of embodiment of a brake dust suction device according to the present invention. Reference will be made to the attached drawings, in which:
Fig. 1 is a prospective view of a brake dust suction device for transporting brake dust from a disc brake to a filter assembly integrated in the brake dust suction device;

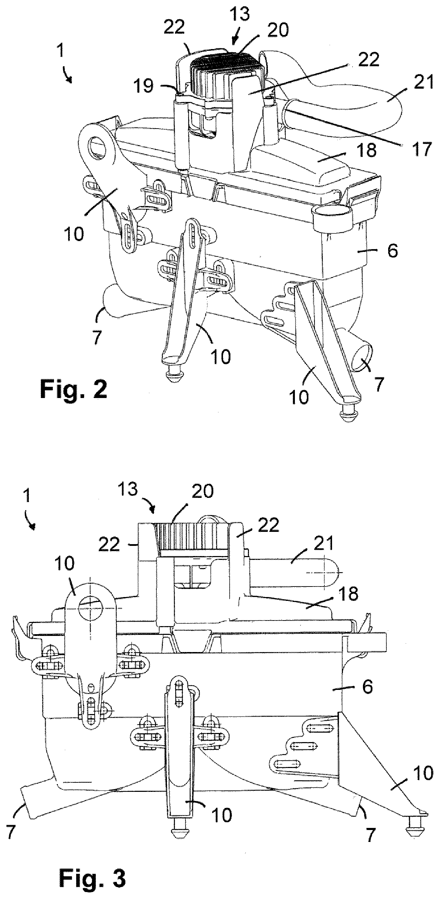

Fig. 2 is a prospective view of a brake dust suction device without brake disc;
Fig. 3 is front view of the brake dust suction device;
Fig. 4 is a plan view of the brake dust suction device; and
Fig. 5 is a sectional view of the brake dust suction device.

In the figures, same components are provided with the same reference numerals.

### Detailed Description

In the figures a brake dust suction device 1 is depicted which can be used in in motor vehicles, to collect dust and particles produced by friction in a disc brake 2 when the vehicle brake is actuated. The disc brake 2 is part of a vehicle brake which is designed as a friction brake and, in addition to a brake disc 3, comprises a brake caliper being placed on a brake caliper holder 4 and is a carrier of brake linings which are applied frictionally to the brake disc 2 during a braking process. The disc brake 2 is located on a wheel of the vehicle with a tire 5. The brake dust suction device 1 is installed in the vehicle and fixed to a vehicle component, e. g. a body frame of the vehicle.

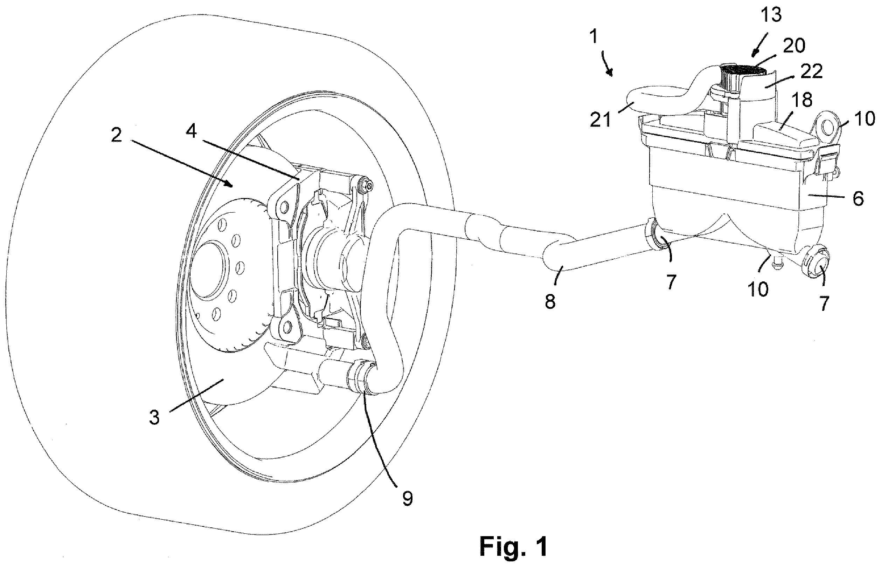

The brake dust suction device 1 has a housing 6 of the brake dust suction device 1 which accommodates filter elements in which the brake dust is collected. The housing 6 has two inlets 7 on opposite sides of the housing. In fig. 1, the inlet 7 on the left side is connected to a suction line 8 that is connected to an opening 9 of the disc brake 2. Brake dust produced in the disc brake 2 is transported to the housing 6 of the brake dust suction device 1 via the suction line 8.

The inlet 7 on the right side of the housing 6 can be connected to another disc brake of the vehicle in a likewise manner.

Mounting devices 10 are fixed to the side walls of the housing 6 of the brake dust suction device 1, preferably by screws. The mounting devices 10 are used for fixing the housing 6 to a vehicle component.

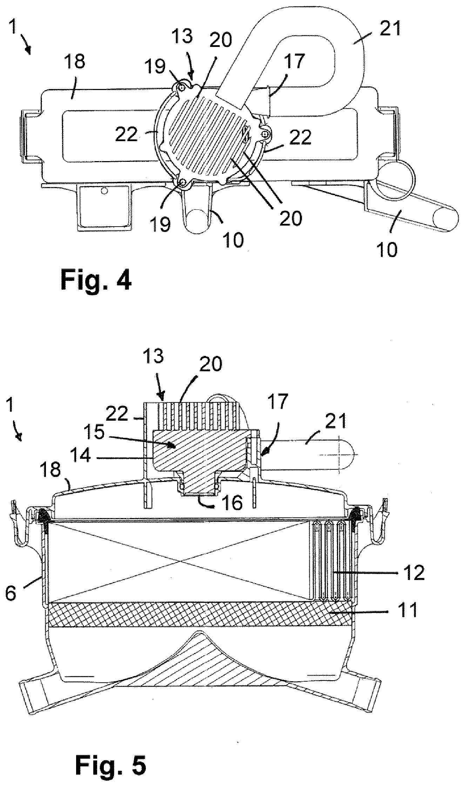

The housing 6 of the brake dust suction device 1 accommodates two filter elements 11 and 12 (fig. 5), respectively, for filtering the air flow conducted by the suction line 8. A first filter element 11 which is made of a cellular material serves as a pre-filter, and a second filter element 12 which is placed downstream and is made of a pleated filter material serves as a main filter.

Fixed to the top of the housing 6 of the brake dust suction device 1 is a suction fan assembly 13 comprising a housing 14, a fan 15 which is arranged in the housing 14, an inlet 16 on the bottom side of the housing 14 and an outlet 17 in a side wall of the housing 14. The suction fan assembly 13 is placed on a hood 18 which is part of the housing 6 of the brake dust suction device 1. The inlet 16 of the housing 14 corresponds to an opening in the center of the hood 18. The housing 14 of the suction fan assembly 13 is fixed with screws 19 to the housing 6 of the brake dust suction device 1.

Furthermore, the suction fan assembly 1 comprises a plurality of ribs 20 arranged on the top surface of the housing 14 of the suction fan assembly 1. Ribs 20 are configured to transfer heat from the suction fan assembly 1 to the outside. More specifically, ribs 20 are configured as plates standing parallel to each other on top of the housing 14, with gaps between adjacent ribs which allow effective cooling by an air flow. Ribs 20 are made one-piece with the housing 14. In embodiments, ribs 20 may instead be pins, each of which having a square or round shape.

The outlet 17 in the side wall of the housing 14 is connected with an air redirection element 21 configured to redirect the air blown out at the outlet 17 of the suction fan assembly 13 to the suction fan 15 so that the suction fan 15 is cooled. The air redirection element 21 is designed as an air redirection line, for example as a flexible ribbed hose. The end of the air redirection element 21 which is opposed to the outlet 17 faces the ribs 20 on top of the housing 14. As can be seen in fig. 4, the air flow leaving the air redirection element 21 is directed parallel to the plate-shaped ribs 20 and the gaps between adjacent ribs 20 so that a maximum cooling of the ribs 20, the housing 14 and the fan 15 is provided. The air flow leaves the plurality of ribs 20 on the opposite side of the air redirection element 21 so that heat from the suction fan assembly 13 is transferred to the outside.

The brake dust suction device 1 further comprises guide ribs 22 extending from side surfaces of the housing 6 of the brake dust suction device 1, the guide ribs 22 being configured to guide the redirected air into the gaps between adjacent ribs 20 on top of the housing 14 of the suction fan assembly 13. The guide ribs 22 are shaped partly circular, each guide rib spanning approximately a quarter of a circle. There are two guide ribs 22 arranged on the top of the hood 18 of the brake dust suction device 1 which are placed on opposite sides of the suction fan assembly 13 and encompass the suction fan assembly 13 which is places on top of the hood 18. Between the two guide ribs 22 a path for the air blown out of the air redirection line 21 is given. The guide ribs 22 are made one-piece with the hood 18 of the housing 6 of the brake dust suction device 1.

The fan 15 of the suction fan assembly 13 is propelled by an electric motor which is controlled by signals of an electronic control unit. The fan 15 and the air flow generated by the fan 15 can be adjusted as a function of state and operating variables of the brake dust suction device 1 and/or the vehicle and/or individual units of the vehicle.

The method to collect dust and particles which are produced by friction in the disc brake and to cool the fan of the suction fan assembly is accomplished as follows:

When the vehicle brake is actuated the fan 15 of the suction fan assembly 13 is driven by the electric motor in order to generate a suctioning air flow in the suction line 8. Dust and particles are then transported via the suction line 8 and the inlet 7 into the housing 6 of the suction fan assembly 13 accomodating the filter elements 11 and 12. The brake dust and particles are filtered from the suctioned air. The clean air leaves the housing 6 and the suction fan assembly 13 via the outlet 17 and is transported via the air redirection line 21 to the ribs 20 on top of the housing 14 of the suction fan assembly 13. The clean air is guided through the gaps between adjacent ribs 20, thus cooling the ribs 20, the housing 14 and the fan 15. After that the air is dissipating into the surrounding atmosphere.

### Reference Numbers

1 brake dust suction device
2 disc brake
3 brake disc
4 brake caliper holder
5 tire
6 housing
7 inlet
8 suction line
9 opening
10 mounting device
11 filter element
12 filter element
13 suction fan assembly
14 housing
15 fan
16 inlet
17 outlet
18 hood
19 screws
20 ribs
21 air direction element
22 guide ribs

## Claims

1. A brake dust suction device comprising:
an inlet (7) connected to a suction line (8) that is connected to an opening (9) of a disc brake (2);
a suction fan assembly (13) comprising a fan (15), a housing (14) and an outlet (17) in the housing (14), and configured to suction air comprising brake dust, from the disc brake (2) through the opening (9), the suction line (9), and the inlet (7);
a filter (12) configured to filter the brake dust from the suctioned air, to output filtered air; the brake dust suction device being **characterized by**
an air redirection element (21) configured to redirect the air blown out at the outlet (17) of the suction fan assembly (13) to the fan (15) of the suction fan assembly (13), to cool the fan (15).

2. Brake dust suction device according to claim 1, **characterized in that** the air redirection element (21) is configured as an air redirection line comprising a flexible ribbed hose.

3. Brake dust suction device to claim 1 or 2, **characterized in that** the suction fan assembly (13) further comprises a plurality of ribs (20) disposed on a top surface of the housing (14), the plurality of ribs (20) being configured to transfer heat from the suction fan assembly (13) to outside.

4. Brake dust suction device according to any of claims 1 to 3, **characterized in that** the brake dust suction device (1) further comprises guide ribs (22) respectively extending from side surfaces of the suction fan assembly (13), the guide ribs (22) being configured to guide the redirected air into areas about the housing (14) of the suction fan assembly (13).

5. Brake dust suction device according to any of claims 1 to 4, **characterized in that** the brake dust suction device (1) comprises another inlet (7) connected to another suction line (8) that is connected to another opening (9) of another disk brake (2), wherein the suction fan assembly (13) is further configured to suction the air comprising the brake dust, from the other disc brake (2) through the other opening (9), the other suction line (8), and the other inlet (7).

6. Brake dust suction device according to any of claims 1 to 5, **characterized in that** the brake dust suction device (1) comprises a housing (6) configured to take up one or several filter elements (11, 12).

7. Brake dust suction device according to claim 6, **characterized in that** the housing (14) of the suction fan assembly (13) is placed on top of the housing (6) of the brake dust suction device (1).

8. Brake dust suction device according to claim 7, **characterized in that** the housing (14) of the suction fan assembly (13) is fixed with screws (19) to the housing (6) of the brake dust suction device (1).

9. Brake dust suction device according to any of claims 6 to 8, **characterized in that** one or more mounting devices (10) are disposed on a side surface of the housing (6) of the brake dust suction device (1), the one or more mounting devices (10) being configured to mount the brake dust suction device (1) to a surface inside a vehicle.

10. Brake dust suction device according to any of claims 1 to 9, **characterized in that** the suction fan (15) of the suction fan assembly (13) is positioned downstream of the filter (12).

11. Brake dust suction device according to any of claims 1 to 10, **characterized in that** the brake dust suction device (1) comprises a pre-filter (11) configured to filter the brake dust from the suctioned air, wherein the filter (12) is placed downstream of the pre-filter (11).

12. Method of using a brake dust suction device according to any of claims 1 to 11, the method comprising:
suctioning, by a suction fan assembly (13) comprising a housing (14) and an outlet (17), air comprising brake dust, from a disc brake (2) through an opening (9) of the disc brake (2), a suction line (8) connected to the opening (9), and an inlet (7) connected to the suction line (8);
filtering, by a filter (12), the brake dust from the suctioned air, to output filtered air;
blowing, by the suction fan assembly (13), the filtered air to an air redirection element (21) at to the outlet (17) of the suction fan assembly (13); and
redirecting, by the air redirection element (21), the blown air to the fan (15) of the suction fan assembly (13), to cool the fan (15).

## Patentansprüche

1. Bremsstaubabsaugvorrichtung, umfassend:
einen Einlass (7), der mit einer Saugleitung(8) verbunden ist, die mit einer Öffnung (9) einer Scheibenbremse (2) verbunden ist;
eine Absaugventilatoranordnung (13), die einen Ventilator (15), ein Gehäuse (14) und einen Auslass (17) im Gehäuse (14) umfasst und so konfiguriert ist, dass sie Bremsstaub enthaltende Luft von der Scheibenbremse (2) durch die Öffnung (9), die Saugleitung (9) und den Einlass (7) ansaugt;
einen Filter (12), der so konfiguriert ist, dass er den Bremsstaub aus der angesaugten Luft filtert, um gefilterte Luft auszugeben; wobei die Bremsstaubabsaugvorrichtung **gekennzeichnet ist durch**
ein Luftumlenkelement (21), das so konfiguriert ist, dass es die am Auslass (17) der Absaugventilatoranordnung (13) ausgeblasene Luft zum Ventilator (15) der Absaugventilatoranordnung (13) umleitet, um den Ventilator (15) zu kühlen.

2. Bremsstaubabsaugvorrichtung nach Anspruch 1, **dadurch gekennzeichnet, dass** das Luftumlenkelement (21) als Luftumlenkleitung ausgebildet ist, die einen flexiblen gerippten Schlauch umfasst.

3. Bremsstaubabsaugvorrichtung nach Anspruch 1 oder 2, **dadurch gekennzeichnet, dass** die Absaugventilatoranordnung (13) ferner eine Vielzahl von Rippen (20) umfasst, die auf einer Oberseite des Gehäuses (14) angeordnet sind, wobei die Vielzahl von Rippen (20) so konfiguriert ist, dass sie Wärme von der Absaugventilatoranordnung (13) nach außen übertragen.

4. Bremsstaubabsaugvorrichtung nach einem der Ansprüche 1 bis 3, **dadurch gekennzeichnet, dass** die Bremsstaubabsaugvorrichtung (1) ferner Leitrippen (22) umfasst, die sich jeweils von Seitenflächen der Absaugventilatoranordnung (13) erstrecken, wobei die Leitrippen (22) so konfiguriert sind, dass sie die umgeleitete Luft in Bereiche um das Gehäuse (14) der Absaugventilatoranordnung (13) leiten.

5. Bremsstaubabsaugvorrichtung nach einem der Ansprüche 1 bis 4, **dadurch gekennzeichnet, dass** die Bremsstaubabsaugvorrichtung (1) einen weiteren Einlass (7) umfasst, der mit einer weiteren Saugleitung (8) verbunden ist, die mit einer weiteren Öffnung (9) einer weiteren Scheibenbremse (2) verbunden ist, wobei die Absaugventilatoranordnung (13) ferner so konfiguriert ist, dass sie die Bremsstaub enthaltende Luft aus der anderen Scheibenbremse (2) durch die andere Öffnung (9), die andere Saugleitung (8) und den anderen Einlass (7) ansaugt.

6. Bremsstaubabsaugvorrichtung nach einem der Ansprüche 1 bis 5, **dadurch gekennzeichnet, dass** die Bremsstaubabsaugvorrichtung (1) ein Gehäuse (6) umfasst, das so konfiguriert ist, dass es ein oder mehrere Filterelemente (11, 12) aufnehmen kann.

7. Bremsstaubabsaugvorrichtung nach Anspruch 6, **dadurch gekennzeichnet, dass** das Gehäuse (14) der Absaugventilatoranordnung (13) auf dem Gehäuse (6) der Bremsstaubabsaugvorrichtung (1) angeordnet ist.

8. Bremsstaubabsaugvorrichtung nach Anspruch 7, **dadurch gekennzeichnet, dass** das Gehäuse (14) der Absaugventilatoranordnung (13) mit Schrauben (19) am Gehäuse (6) der Bremsstaubabsaugvorrichtung (1) befestigt ist.

9. Bremsstaubabsaugvorrichtung nach einem der Ansprüche 6 bis 8, **dadurch gekennzeichnet, dass** eine oder mehrere Montagevorrichtungen (10) an einer Seitenfläche des Gehäuses (6) der Bremsstaubabsaugvorrichtung (1) angeordnet sind, wobei die eine oder mehreren Montagevorrichtungen (10) so konfiguriert sind, dass sie die Bremsstaubabsaugvorrichtung (1) an einer Oberfläche im Inneren eines Fahrzeugs befestigen.

10. Bremsstaubabsaugvorrichtung nach einem der Ansprüche 1 bis 9, **dadurch gekennzeichnet, dass** der Absaugventilator (15) der Absaugventilatoranordnung (13) stromabwärts des Filters (12) positioniert ist.

11. Bremsstaubabsaugvorrichtung nach einem der Ansprüche 1 bis 10, **dadurch gekennzeichnet, dass** die Bremsstaubabsaugvorrichtung (1) einen Vorfilter (11) umfasst, der so konfiguriert ist, dass er den Bremsstaub aus der angesaugten Luft filtert, wobei der Filter (12) stromabwärts des Vorfilters (11) angeordnet ist.

12. Verfahren zur Verwendung einer Bremsstaubabsaugvorrichtung gemäß einem der Ansprüche 1 bis 11, wobei das Verfahren umfasst:
Ansaugen, mittels einer Absaugventilatoranordnung (13), die ein Gehäuse (14) und einen Auslass (17) umfasst, von Luft, die Bremsstaub enthält, von einer Scheibenbremse (2) durch eine Öffnung (9) der Scheibenbremse (2), eine mit der Öffnung (9) verbundene Saugleitung (8) und einen mit der Saugleitung (8) verbundenen Einlass (7);
Filtern des Bremsstaubs aus der abgesaugten Luft durch einen Filter (12), um gefilterte Luft auszugeben;
Blasen der gefilterten Luft durch die Absaugventilatoranordnung (13) zu einem Luftumlenkelement (21) am Auslass (17) der Absaugventilatoranordnung (13); und
Umleiten der geblasenen Luft durch das Luftumlenkelement (21) zu dem Ventilator (15) der Absaugventilatoranordnung (13), um den Ventilator (15) zu kühlen.

## Revendications

1. Dispositif d'aspiration de poussière de frein comprenant:
une entrée (7) reliée à une conduite d'aspiration (8) reliée à une ouverture (9) d'un frein à disque (2);
un ensemble de ventilateurs d'aspiration (13) comprenant un ventilateur (15), un boîtier (14) et une sortie (17) dans le boîtier (14), et configuré pour aspirer l'air comprenant la poussière de frein, depuis le frein à disque (2) à travers l'ouverture (9), la conduite d'aspiration (9) et l'entrée (7);
un filtre (12) configuré pour filtrer la poussière de frein de l'air aspiré, afin de produire de l'air filtré; le dispositif d'aspiration de poussière de frein étant **caractérisé par**
un élément de redirection d'air (21) configuré pour rediriger l'air expulsé à la sortie (17) de l'ensemble de ventilateurs d'aspiration (13) vers le ventilateur (15) de l'ensemble de ventilateurs d'aspiration (13), afin de refroidir le ventilateur (15).

2. Dispositif d'aspiration de poussière de frein selon la revendication 1, **caractérisé en ce que** l'élément de redirection d'air (21) est configuré comme une conduite de redirection d'air comprenant un tuyau flexible nervuré.

3. Dispositif d'aspiration de poussière de frein selon la revendication 1 ou 2, **caractérisé en ce que** l'ensemble de ventilateurs d'aspiration (13) comprend en outre une pluralité de nervures (20) disposées sur une surface supérieure du boîtier (14), la pluralité de nervures (20) étant configurée pour transférer la chaleur de l'ensemble de ventilateurs d'aspiration (13) vers l'extérieur.

4. Dispositif d'aspiration de poussière de frein selon l'une quelconque des revendications 1 à 3, **caractérisé en ce que** le dispositif d'aspiration de poussière de frein (1) comprend en outre des nervures de guidage (22) s'étendant respectivement à partir des surfaces latérales de l'ensemble de ventilateurs d'aspiration (13), les nervures de guidage (22) étant configurées pour guider l'air redirigé vers des zones autour du boîtier (14) de l'ensemble de ventilateurs d'aspiration (13).

5. Dispositif d'aspiration de poussière de frein selon l'une quelconque des revendications 1 à 4, **caractérisé en ce que** le dispositif d'aspiration de poussière de frein (1) comprend une autre entrée (7) reliée à une autre conduite d'aspiration (8) qui est reliée à une autre ouverture (9) d'un autre frein à disque (2), dans lequel l'ensemble de ventilateurs d'aspiration (13) est en outre configuré pour aspirer l'air comprenant la poussière de frein, à partir de l'autre frein à disque (2) à travers l'autre ouverture (9), l'autre conduite d'aspiration (8) et l'autre entrée (7).

6. Dispositif d'aspiration de poussière de frein selon l'une quelconque des revendications 1 à 5, **caractérisé en ce que** le dispositif d'aspiration de poussière de frein (1) comprend un boîtier (6) configuré pour recevoir un ou plusieurs éléments filtrants (11, 12).

7. Dispositif d'aspiration de poussière de frein selon la revendication 6, **caractérisé en ce que** le boîtier (14) de l'ensemble de ventilateurs d'aspiration (13) est placé au-dessus du boîtier (6) du dispositif d'aspiration de poussière de frein (1).

8. Dispositif d'aspiration de poussière de frein selon la revendication 7, **caractérisé en ce que** le boîtier (14) de l'ensemble de ventilateurs d'aspiration (13) est fixé à l'aide de vis (19) au boîtier (6) du dispositif d'aspiration de poussière de frein (1).

9. Dispositif d'aspiration de poussière de frein selon l'une quelconque des revendications 6 à 8, **caractérisé en ce qu'un** ou plusieurs dispositifs de montage (10) sont disposés sur une surface latérale du boîtier (6) du dispositif d'aspiration de poussière de frein (1), le ou les dispositifs de montage (10) étant configurés pour monter le dispositif d'aspiration de poussière de frein (1) sur une surface à l'intérieur d'un véhicule.

10. Dispositif d'aspiration de poussière de frein selon l'une quelconque des revendications 1 à 9, **caractérisé en ce que** le ventilateur d'aspiration (15) de l'ensemble de ventilateurs d'aspiration (13) est positionné en aval du filtre (12).

11. Dispositif d'aspiration de poussière de frein selon l'une quelconque des revendications 1 à 10, **caractérisé en ce que** le dispositif d'aspiration de poussière de frein (1) comprend un préfiltre (11) configuré pour filtrer la poussière de frein de l'air aspiré, dans lequel le filtre (12) est placé en aval du préfiltre (11).

12. Procédé d'utilisation d'un dispositif d'aspiration de poussière de frein selon l'une quelconque des revendications 1 à 11, le procédé comprenant:
aspirer, à l'aide d'un ensemble de ventilateurs d'aspiration (13) comprenant un boîtier (14) et une sortie (17), l'air contenant la poussière de frein provenant d'un frein à disque (2) à travers une ouverture (9) du frein à disque (2), une conduite d'aspiration (8) reliée à l'ouverture (9) et une entrée (7) reliée à la conduite d'aspiration (8);
filtrer, à l'aide d'un filtre (12), la poussière de frein provenant de l'air aspiré, afin de générer de l'air filtré;
souffler, à l'aide du ventilateur d'aspiration (13), l'air filtré vers un élément de redirection d'air (21) situé à la sortie (17) du ventilateur d'aspiration (13); et
rediriger, à l'aide de l'élément de redirection d'air (21), l'air soufflé vers le ventilateur (15) de l'ensemble de ventilateurs d'aspiration (13), afin de refroidir le ventilateur (15).
